Europäisches Patentamt

European Patent Office

Office européen des brevets

(19)

(11) Numéro de publication: **0 179 674**
**B1**

(12) # FASCICULE DE BREVET EUROPÉEN

(45) Date de publication du fascicule du brevet:
08.03.89

(51) Int. Cl.⁴: **C 02 F 1/52,** B 01 D 21/00

(21) Numéro de dépôt: 85401569.0

(22) Date de dépôt: 31.07.85

(54) **Dispositif de clarification et procédé de clarification à deux étages pour liquide chargé de matières solides.**

(30) Priorité: 31.07.84 FR 8412141

(43) Date de publication de la demande:
30.04.86 Bulletin 86/18

(45) Mention de la délivrance du brevet:
08.03.89 Bulletin 89/10

(84) Etats contractants désignés:
AT BE CH DE FR GB IT LI NL SE

(56) Documents cité:
EP-A-0 052 864
GB-A-434 695
US-A-2 382 490
US-A-3 517 814
US-A-4 330 401

(73) Titulaire: **ALSTHOM, 38, avenue Kléber, F-75784
Paris Cédex 16 (FR)**

(72) Inventeur: **Condolios, Elie, 6, rue Aristide Bergès,
F-38000 Grenoble (FR)**

(74) Mandataire: **Weinmiller, Jürgen, Lennéstrasse 9
Postfach 24, D-8133 Feldafing (DE)**

EP 0 179 674 B1

LIBER, STOCKHOLM 1989

## Description

L'invention concerne un dispositif de clarification rapide d'eaux chargées de matières fines en suspension selon le préambule de la revendication 1. Un tel dispositif est connu, par exemple à partir du document FR-A-2 477 896.

Les eaux à clarifier apparaissent généralement en sortie d'un processus industriel et elles sont par exemple destinées à un second usage industriel ou à un rejet dans le domaine des eaux publiques. Toutefois, ces indications ne sont nullement restrictives. Bien que la description ci-après se réfère à des exemples pratiques de mise en oeuvre du procédé dans le cas d'eaux résduelles d'industries minérales, il est bien entendu que ce dernier peut être appliqué à la clarification de liquides chargés très divers.

Jusqu'à présent les procédés utilisés nécessitaient d'une façon générale un temps relativement long pour assurer la séparation et la décantation des matières solides en suspension et obtenir un liquide ou une eau suffisamment clarifiée pour répondre aux normes imposées, ceci parceque la vitesse ascensionnelle de séparation ne dépassait pas quelques mètres/heure. Ils obligeaient à utiliser un équipement de séparaton coûteux et de dimensions et volume importants.

Par le document US-A-2 382 490, on connaît un procédé pour l'épuration des eaux dans lequel l'eau est soumise à un traitement pour former des matières finement divisées en suspension. La chaux ou le carbonage de soude est ajouté à l'eau à la base d'un mélangeur pendant que l'alaun est dosé à la sortie du mélangeur, pour induire la formation de flocons. L'eau traitée entre dans un étage primaire de clarification dans l'enceinte.

A la base de l'enceinte s'établit un lit de boue. Une partie de l'eau, qui a été clarifiée, est évacuée de la partie supérieure de l'enceinte par la tubulure. A la base de l'enceinte on retire un mélange d'eau et de la boue par deux tubulures pour le diriger vers un étage secondaire de clarification. La boue est évacuée à la base de l'étage secondaire, en continu ou non, et une seconde fraction d'eau clarifiée quitte l'étage secondaire en haut.

Généralement, après floculation, le liquide chargé de flocons de tailles et de densités différentes est introduit dans une zone de décantation contenant une concentration plus importante de flocons ce qui permet d'accélérer le grossissement des flocons et par voie de conséquence leur vitesse de sédimentation. Les flocons décantés dans la partie basse de la zone de décantation se concentrent et sont extraits, de façon généralement contenue mais parfois discontinue, sous la forme de boue plus ou moins concentrée suivant un débit moyen convenablement déterminé. Le liquide clarifié est enlevé en même temps dans la partie haute du dispositif de décantation par simple débordement. Ce cas est celui d'un dispositif assurant la clarification et la décantation des solides dans un même seul compartiment, c'est-à-dire à un seul étage.

Il est également connu que pour obtenir un effet plus rapide des deux fonctions de clarification des liquides et de concentration des solides, on peut séparer les deux fonctions et faire en sorte qu'elles soient réalisées dans deux parties distinctes de l'appareil. On dit alors que le dispositif est à deux étages. Les étages peuvent être superposés, l'étage de clarification étant au dessus de l'étage de concentration, ou concentriques, ou côte à côte.

Mais pour obtenir le plus grand effet sur la vitesse de clarification du liquide et de concentration des solides il est nécessaire de maitriser l'ensemble des mouvements hydrauliques dans les différentes parties du dispositif afin de former des flocons les plus denses possibles, d'une granulométrie des agglomérats suffisamment élevée par exemple d'une dimension de 1 à 10 mm et ne contenant pratiquement plus de matières fines en suspension non floculées.

Il est connu que le phénomène de floculation déclenché par des adjuvants de floculation forme des agglomérats dont la cohésion mécanique est faible, et que les mouvements hydrauliques dans la zone de clarification peuvent avoir à la fois des effets bénéfiques ou néfastes quant à la structure et aux caractéristiques physiques des agglomérats.

Des vitesse trop rapides dans certaines parties de l'appareil détruisent les flocons formés et forment des flocons dont le spectre granulométrique est trop étendu avec beaucoup d'agglomérats très fins se décantant mal. Des vitesses trop lentes dans d'autres parties permettent la formation de flocons trop gros qui s'agglomèrent entre eux. Ils forment alors des couches continues peu perméables qui gènent le passage du liquide à clarifier. Des phénomènes d'instabilité apparaissent alors avec formation de zones où ce liquide prend des vitesses rapides qui détruisent les flocons.

Plus particulièrement un procédé de clarification connu comporte les opérations suivantes:

- adjonction au liquide chargé d'un adjuvant de floculation pour que lesdites particules fines qui se rencontrent se lient en formant des flocons,
- introduction sensiblement continue de ce mélange dans une chambre de distribution à pression sensiblement uniforme amenant ce mélange dans une chambre de clarification à travers une pluralité d'injecteurs répartis sur la surface de cette chambre au bas de celle-ci,
- évacuation du liquide clarifié par un orifice d'évacuaton de liquide en partie supérieure de cette chambre,
- et évacuation de boue à travers un orifice d'évacuation de boue situé plus bas.

Le débit de liquide chargé injecté est choisi de manière à former au dessus de ces injecteurs un lit de boue au sein duquel le liquide chargé monte entre des flocons déjà formés, les particules fines de cette eau se lient à ces flocons pour accroître le volume de ces derniers, de sorte que le liquide arrive au-dessus de ce lit de boue partiellement clarifié, et qu'une couche de liquide clarifiée se forme au-dessus du lit de boue.

Ce procédé connu est décrit dans ledit brevet français N° 2 477 896 (Ghezail et autres). Il présente les caractéristiques plus particulières suivantes:

Les injecteurs sont des orifices d'injection percés dans le plancher de la chambre de clarification. Des éléments en forme d'entonnoir s'élargissent vers le haut à partir de ces orifices. Dans chaque plan horizontal coupant un tel entonnoir, la section de passage de l'eau chargée injectée serait, selon ce brevet (page 5, lignes 1 - 5) constituée par la totalité de la zone intérieure à l'entonnoir ce qui entrainerait une diminution très rapide de la vitesse de cette eau après la sortie des orifices d'injection. Ce résultat est recherché car dans ce procédé, on souhaite essentiellement l'absence d'agitation dans le lit de boue au-dessus des orifices d'injection. En fait, dès que la vitesse à travers l'orifice d'injection est sensible, il se forme un jet cylindrique axial à distance des parois de l'entonnoir. Par ailleurs dans ce procédé, une sortie temporaire partielle de la boue se fait de manière périodique à travers les orifices d'injection, par une aspiration temporaire entrainant une inversion brusque du sens de circulation à travers les orifices d'injection.

Ce sont ces inversions périodiques brèves du sens de circulation de l'eau chargée qui empêchent dans une certaine mesure la formation d'une couche continue insuffisamment perméable et l'apparition des phénomènes d'instabilité précédemment mentionnés.

Les parois inclinées des entonnoirs permettent d'amener la boue à ces orifices d'injection lors des inversions périodiques.

Un deuxième procédé connu permet d'éviter dans une certaine mesure la formation d'une couche continue insuffisamment perméable de boue. Il est décrit dans le brevet français n° 1 115 038 (Degremont) et utilise des accélérations temporaires périodiques du courant d'eau chargée à travers les orifices d'injection.

Un troisieme procédé est connu par le brevet franças n° 2 431 317 (Dorr Olver) correspondant au brevet américain n° 4 263 137 (Kos). Il utilise des injecteurs mobiles comportant des moyens de guidage en forme d'entonnoirs qui assurent un ralentssement du courant d'eau chargé injecté et sa répariton.

On connaît, par ailleurs, à partir du document US-A-4 330 401 un dispositif pour la clarification des eaux, utilisant un lit de boue et deux chambres de clarification, l'une au-dessus de l'autre.

La présente invention a pour but de réaliser de manière simple et économique un dispositif de clarification efficace à lit de boue dans lequel la stabilité du lit de boue permette une grande vitesse ascensionnelle moyenne du liquide. Ce but est atteint par le dispositif défini dans la revendication 1. En ce qui concerne des caractéristiques d'une mise en oeuvre préférée de ce dispositif, référence est faite aux sous-revendications.

L'augmentation de cette vitesse ascensionnelle moyenne se traduit par un débit accru du liquide chargé traité dans une installation de surface donnée, où, à débit à traiter donné, par une diminution de la surface nécessare de l'installation. Lorsque le débit d'eau à traiter est important, cette diminution de la surface de l'installation constitue un avantage économiquement important.

A l'aide des figures schématiques ci-jointes on va décrire plus particulièrement ci-après, à titre non limitatif, comment l'invention peut être mise en oeuvre. Lorsqu'un même élément est représenté sur plusieurs figures, il y est désigné par le même signe de référence.

La figure 1 représente une vue d'un dispositif de mise en oeuvre de l'invention en coupe par un plan I - I de la figure 2, ce plan passant par l'axe vertical de ce dispositif.

La figure 2 représente une vue de ce dispositif en coupe par un plan horizontal II - II de la figure 1, à une échelle agrandie.

La figure 3 représente un détail de la figure 1 à la même échelle agrandie.

La figure 4 représente une vue très schématique des tourbillons créés dans le lit de boue par un injecteur.

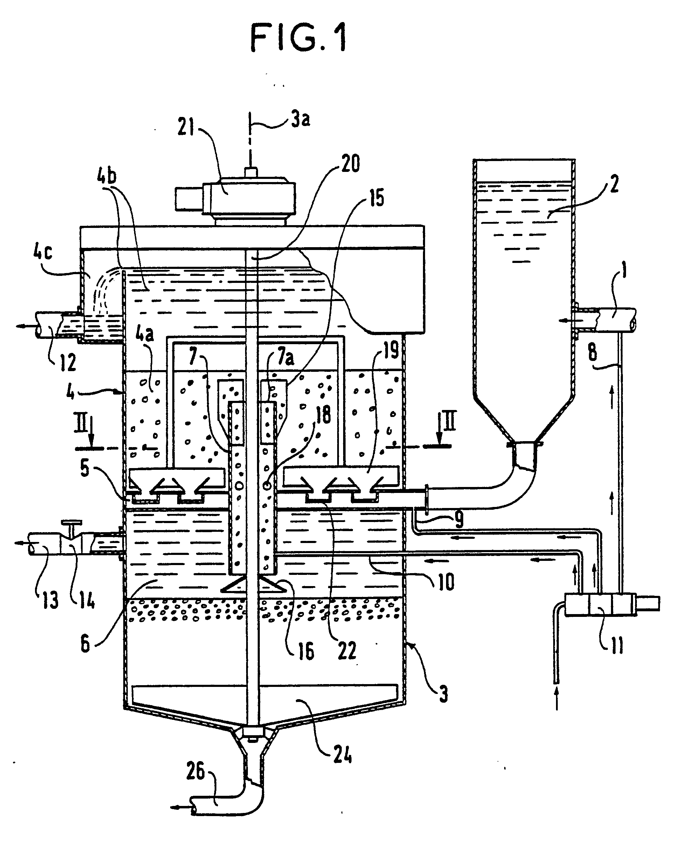

Conformément à la figure 1, le liquide chargé qui contient des matières solides en suspension (par exemple des argiles issus du lavage de phosphate) constitué par de l'eau et il est introduit par une canalisaton 1 dans une cuve de floculation primaire 2 pour alimenter un appareil clarificateur décanteur 3.

Cet appareil clarificateur et décanteur présente un axe vertical 3a et il est principalement composé de deux étages de forme généralement cylindrique et superposés un étage primaire supérieur 4 constitue ladite chambre de clarification. Il déverse par débordement sur un seuil circulaire 4b constituant ledit orifice d'évacuation d'eau. Il est limité à sa partie basse par une chambre 5 qui constitue ladite chambre de distribution et sépare l'étage supérieur 4 de l'étage secondaire inférieur 6 qui constitue une chambre d'épaississement.

Le fond de l'étage primaire supérieur 4 est représenté de forme horizontale. Il peut être également de forme conique à pointe en bas sans altérer le fonctionnement de l'appareil.

La chambre 5 placée entre les deux étages 4 et 6 sert à l'alimentation du lit de boue 4a qui se forme dans la partie basse de l'étage supérieur et dans lequel a lieu une floculation secondaire grâce à laquelle se forment les agglomérats ou flocons qui seront décantés et concentrés dans l'étage inférieur 6.

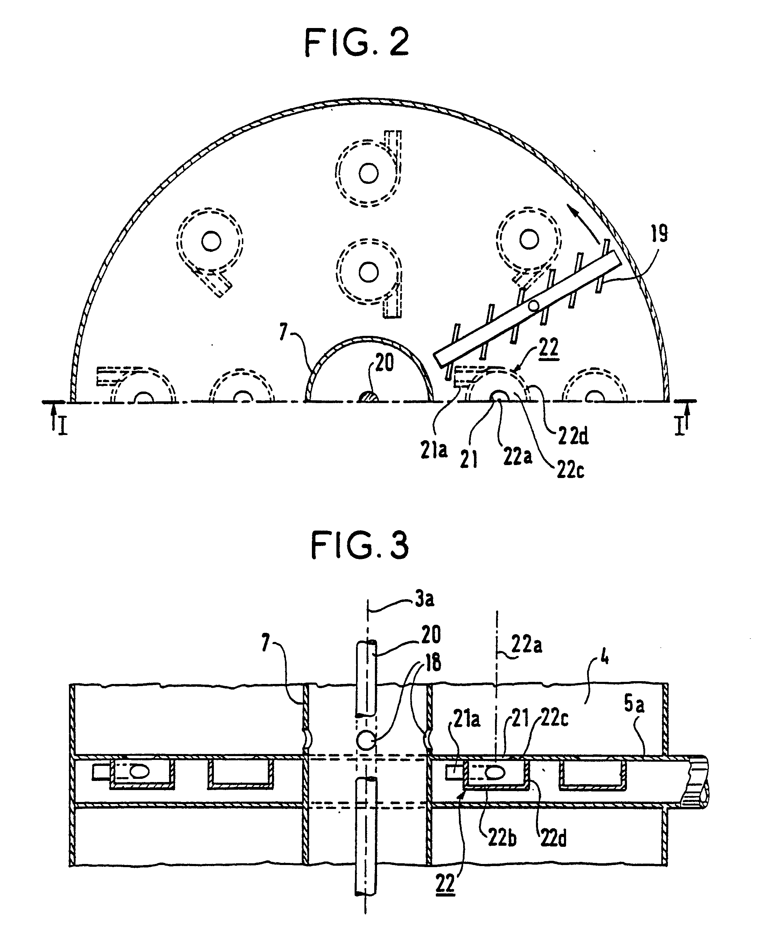

Les injecteurs qui équipent cette chambre 5 seront décrits de façon plus précise ci-après à l'aide des figures 2 et 3.

L'étage primaire supérieur 4 et l'étage secondaire inférieur 6 sont reliés hydrauliquement par un puits central 7 qui s'ouvrent en 7a dans l'épaisseur du lit de boue et que permet de faire passer les flocons constitués dans ce lit de boue de l'étage primaire dans l'étage secondaire inférieur ou ils vont se décanter et se concentrer.

Il est possible d'utiliser pour la formation des agglomérats les divers adjuvants de floculation que l'on trouve dans le commerce y compris les différents polymères à condition toutefois que le floculant utilisé soit le mieux adapté aux matières solides à décanter et aux caractéristiques du liquide à clarifier.

L'adjuvant utilisé pour la floculation est dilué à la bonne concentration pour obtenir son effet maximum et il est injecté généralement en deux ou trois point de l'appareil.

Comme le montre la figure 1 une première dose d'adjuvant est introdute en 8 avant l'introduction de l'eau à clarifier dans la cuve 2 afin de déclencher la floculation primaire dans cette cuve avec la formation de petits flocons de faibles dimensions inférieurs à 1 à 2 mm.

Après cette floculation une deuxième dose d'adjuvant est introdute en 9 à l'entrée de la chambre de distribution 5 qui sert en même temps de chambre de mélange.

La floculaton secondaire s'effectue dans le lit de boue 4a de l'étage primaire supérieur 4. Généralement les deux premières floculations sont suffisantes, mais pour certains types de particules on peut adjoindre une troisième dose du même adjuvant en un point 10 au bas du puits 7 avant l'entrée dans l'étage inférieur 6. Quelquefois l'adjuvant introduit en 10 peut être de nature différente car il peut être un adjuvant qui accélère la concentration des flocons dans l'étage 6. Les différentes quantités d'adjuvants introduits sont dosées par une pompe doseuse multitêtes 11 ou par deux pompes du même type si les adjuvants sont différents.

Les deux étages de l'appareil fournissent du liquide clarifié: l'étage supérieur par débordement et évacuation par un canal circulaire 4c et une tubulure 12, l'étage inférieur 6 par une tubulure 13. Cette tubulure est munie d'une vanne ou d'un autre dispositif de réglage hydaulique 14 afin de régler la proportion de liquide clarifié sortant de l'étage primaire par la tubulure 12 et de l'étage secondaire par la tubulure 13.

Généralement le débit de liquide clarifié produit par l'étage primaire est pratiquement égal à celui produit par l'étage secondaire. Cette proportion pourra être modifiée si l'on veut améliorer la qualité de la clarification du liquide et augmenter le rapport du débit secondaire au débit primaire, qui pourra aller jusqu'à deux.

Afin d'améliorer la stabilité du lit de boue 4a dans l'étage primaire 4 le puits central 7 est équipé d'un certain nombre d'ailettes anti-vortex 15.

Par ailleurs pour améliorer la distribution du liquide chargé passant par le puits 7 et qui alimente l'étage inférieur 6 ce puits 7 est équipé dans sa partie basse par un déflecteur de forme conique 16.

Le puits 7 est non seulement ouvert à son sommet 7a dans l'épaisseur du lit de boue 4a, mais aussi perforé de un ou plusieurs trous 18 placés près du fond de l'étage supérieur 4 afin de faire communiquer directement le bas du lit de boue avec le puits. Cette disposition permet de faire passer une faible partie du débit de liquide chargé contenu dans le lit de boue 4a vers le puits 7, la majeure partie débordant au sommet du puits 7 pour s'écouler vers l'étage 6. Cette disposition offre l'avantage de faire passer directement dans le puits 7 des agglomérats qui auraient trop grossi et qui ne pourraient remonter jusqu'au sommet du puits 7.

Pour faciliter l'évacuation de gros agglomérats par les trous 18 des pales de raclage 19 repoussent grâce à leur mouvement de rotation lente par effet mécanique centripete ces gros agglomérats vers les trous du puits pour les évacuer. Ces pales sont commandées par un arbre de commande 20 actionné par un moto-réducteur 21. Ce même arbre 20 commande également par le même mouvement des pales de raclage 24 qui permettent l'évacuation des boues concentrées dans le fond de l'étage secondaire 6 afin de les évacuer hydrauliquement par une tubulure 26.

La figure 3 montre une vue en coupe agrandie de la chambre de distribution 5 et des injecteurs et la figure 2 montre une vue en plan partielle de ces mêmes injecteurs.

Comme il a été dit précédémment, la formation des agglomérats, l'homogénéité de leur granulométrie et de leur densité sont des paramètres essentiels du bon fonctionnement de l'appareil de clarificaton.

Pour atteindre l'objectif recherché selon l'invention, il est nécessaire d'assurer une équirépartition la plus parfaite possible du débit du liquide à clarifier sur l'ensemble se la surface transversale de l'appareil donc une uniformité des vitesses de l'écoulement ascendant dans le lit de boue 4a contenue dans la chambre 4.

Pour cela comme cela est montré sur la figure 3 l'étage primaire de clarification 4 est limité à son fond par la chambre 5 qui porte dans sa partie supérieure une séparation 5a qui forme le plancher de la chambre de clarification 4 et qui est percée de trous d'injection répartis sur sa surface. Ces trous 21 permettent d'introduire dans cette chambre le liquide à clarifier ayant déjà reçu les deux doses d'adjuvants de floculation primaire et secondaire.

Chaque trou 21 constitue la sortie d'une chambre de cyclone plate 22 qui créé un mouvement tourbillonnaire de façon à faire éclater le liquide à clarifier à la sortie de chaque trou 21 sur une surface de 40 à 100 fois supérieure à la surface de chaque trou.

Comme le montre la figure 2 chaque chambre de cyclone plate 22 a une entrée tangentielle 21a de façon à amorcer dans cette chambre un mouvement tourbillonnaire qui se poursuit par continuité dans les trous 21 et dans le bas du lit de boue 4a amenant ainsi une distribution homogène du liquide à clarifier et un mélange des adjuvants de floculation avec ce même liquide.

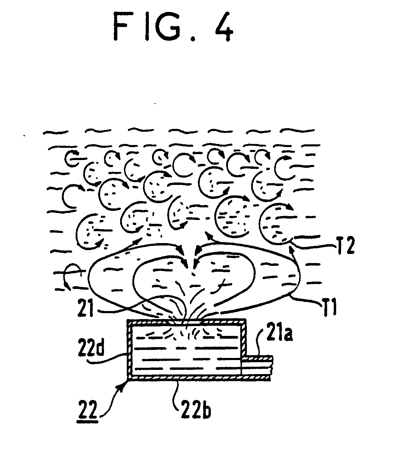

Ces cyclones plats 22 avec leurs trous de sortie 21 et leurs entrées 21a constituent chacun un dit injecteur, qui présente un axe vertical 22a et crée un tourbillon primaire du genre précédemment mentionné. Ce tourbillon est représenté en T1 sur la figure 4. Il atteint le bord de la zone d'expanson 22b de l'injecteur. Il revient ensuite vers l'axe de cet injecteur et un courant descendant apparaît sur cet axe. Il entretient des tourbillons secondaires tels que T2 au-dessus de lui qui entretiennent eux mêmes d'autres tourbillons. Il en résulte dans le lit de boue une agitation tourbillonnaire sensible en partie basse. Cette agitation décroit vers le haut, et la couche supérieure du lit de boue n'est pratiquement pas agitée.

Par ailleurs comme le montre la figure 2 les entrées tangentielles des cyclones sont placées de façon alternée avec un sens tournant du mouvement tourbillonnaire de gauche à droite ou de droite à gauche de façon à annuler les mouvements partiels de fond et éviter un mouvement tourbillonnaire de masse dans la chambre 4.

Pour montrer l'intérêt de l'invention et à titre d'exemple, en comparaison avec un appareil de 1 m de diamètre à deux étages avec une alimentation du lit de boue par le système classique à fente qui clarifiait de 16 à 18 m³/h d'eaux argileuses chargées à une concentration de 30 à 40 g/litre de matières solides, un appareil du type décrit dans l'invention ci-avant de mêmes dimensions a pu clarifier un débit de 70 à 80 m³/h avec la même consommation de floculant à la tonne de matières sèches décantées soit 90 à 100 grammes de floculant à la tonne.

L'appareil expérimenté était équpé à l'alimentation du lit de boue d'une cinquantaine d'injecteurs cyclones équipés de trous de sortie dans le lit de boue de diamètre 20 mm.

Le dispositif décrit ci-dessus est par ailleurs décrit dans une demande de brevet européen N° 85 401 570.8 ayant les mêmes dates de priorité et de dépôt.

## Revendications

1. Dispositif de clarification à lit de boue pour liquide chargé de particules solides, ce dispositif étant plus précisément destiné à recevoir un liquide chargé de particules fines en suspension et à fournir d'une part un liquide clarifié et d'autre part une boue, ce dispositif comportant

- une chambre de clarification (4),
- une chambre de distribution (5) s'étendant sous cette chambre de clarification,
- des moyens (8, 9, 11) pour ajouter un adjuvant de floculation audit liquide chargé de manière à réaliser un mélange au sein duquel lesdites particules fines qui se rencontrent se lient avec l'aide de cet adjuvant en formant des flocons,
- des moyens (2) pour introduire ledit mélange dans cette chambre de distribution en y créant une pression sensiblement uniforme,
- une pluralité d'injecteurs (22) présentant chacun un axe (22a), pourvus chacun de moyens de guidage, et répartis sur la surface de la chambre de clarification au fond de celle-ci, chacun de ces injecteurs faisant communiquer la chambre de distribution avec la chambre de clarification pour introduire en continu ledit mélange au bas de cette dernière chambre avec un débit réparti sur la surface de cette chambre,
- un orifice d'évacuation continue de liquide clarifié (4b) en partie supérieure de la chambre de clarification (4),
- et un orifice d'évacuation continue de boue (26) plus bas que ledit orifice d'évacuation de liquide clarifié,
- le débit desdits injecteurs étant choisi de manière à former au-dessus de ces injecteurs un lit de boue (4a) au sein duquel un liquide mélangé chargé monte entre des flocons déjà formés, de sorte que les particules fines encore en suspension dans ce liquide se lient à ces flocons pour accroître le volume de ces derniers, et que le liquide arrive clarifié au-dessus de ce lit de boue en formant une couche de liquide clarifié (4a),
- ce dispositif étant caractérisé par le fait qu'il comporte en outre une chambre d'épaississement (3) de type connu en soi constituant un étage secondaire alors que ladite chambre de clarification constitue un étage primaire, cette chambre d'épaississement étant disposée au-dessous de la chambre de clarification et coextensive à celle-ci,
- et un puits central vertical (7) comportant une entrée haute (7a) pour recevoir par déversement les flocons de la couche supérieure dudit lit de boue et limiter la hauteur de celui-ci, une entrée basse constituée par au moins un trou (18) dans la chambre de clarification (4) au bas de celle-ci pour recevoir de gros agglomérats denses de flocons formés dans le lit de boue, et une sortie à une altitude intermédiaire dans ladite chambre d'épaississement (3),
- cette chambre d'épaississement comportant une sortie d'eau clarifiée (13) plus haut que la sortie dudit puits central et une sortie de boue (26) en partie basse.

2. Dispositif selon la revendication 1, caractérisé par le fait que lesdites chambres d'épaississement (3), de distribution (5) et de clarification (4) présentent des parois latérales sensiblement en continuité, de manière à permettre une construction facile du dispositif.

3. Dispositif selon la revendication 1, caractérisé par le fait qu'il comporte un arbre axial (20) entrainé en rotation par un moteur (21) et entraînant à la fois des bras de raclage (19) au fond de ladite chambre de clarification pour amener lesdits gros agglomérats vers l'entrée basse (18) du puits central (7), et des bras de raclage (24) au fond de ladite chambre d'épaississement (3) pour amener la boue épaissie vers ladite sortie de boue (26) de cette chambre.

4. Dispositif selon la revendication 1, caractérisé par le fait que ledit puits central (7) est muni dans sa partie basse d'un déflecteur (16) permettant d'améliorer la distribution du liquide concentré en agglomérats dans l'étage secondaire (3).

5. Dispositif selon la revendication 1, caractérisé par le fait que le fond de l'étage primaire (4) portant les injecteurs (22) est horizontal ou de forme légèrement conique à pointe en bas.

6. Dispositif selon la revendication 1, caractérisé par le fait que le fond de l'étage secondaire de concentration des boues (3) est horizontal ou de forme légèrement conique à pointes en bas et muni de pales de raclage tournantes (24) qui permettent d'évacuer de façon continue les matières solides décantées au fond.


**Patentansprüche**

1. Kläranlage mit einem Schlammbett zum Klären einer mit festen Partikeln befrachteten Flüssigkeit, insbesondere zur Verarbeitung einer Flüssigkeit mit feinen darin suspendierten Teilchen und zur Abgabe einerseits einer klaren Flüssigkeit, andererseits eines Schlammes, wobei die Anlage aufweist:
- eine Klärkammer (4),
- eine Verteilerkammer (5), die sich unter der Klärkammer erstreckt,
- Mittel (8, 9, 11) zur Zugabe eines Flockenbildnerzusatzes zur befrachteten Flüssigkeit, so daß sich ein Gemisch ergibt, in welchem die sich begegnenden feinen Teilchen sich aneinander mit Hilfe des Flockenbildnerzusatzes unter der Bildung von Flocken binden,
- Mittel (2) zur Einleitung dieses Gemisches in die Verteilerkammer unter Herstellung eines im wesentlichen gleichmäßigen Druckes darin,
- eine Vielzahl von über die Oberfläche der Klärkammer am Boden derselben verteilten Injektoren mit je einer Achse (22a) und Führungsmitteln, wobei jeder der Injektoren die Verteilerkammer mit der Klärkammer zur kontinuierlichen Einleitung des Gemisches in den unteren Teil dieser Kammer verbindet und der Durchsatz über die Oberfläche der Kammer verteilt ist,
- eine Öffnung zur kontinuierlichen Entnahme geklärter Flüssigkeit aus dem oberen Teil der Klärkammer (4),
- und eine Öffnung zur kontinuierlichen Entnahme von Schlamm (26) an einer tiefer liegenden Stelle als die Öffnung zur Entnahme geklärter Flüssigkeit,
- wobei der Durchsatz der genannten Injektoren so gewählt ist, daß über den Injektoren ein Schlammbett (4a) gebildet wird, in welchem eine befrachtete vermischte Flüssigkeit zwischen den bereits gebildeten Flocken aufsteigt, derart, daß sich die noch in der Flüssigkeit suspendierten feinen Partikel an diese Flocken binden und deren Volumen vergrößern und daß die Flüssigkeit über dem Schlammbett unter Bildung einer Schicht geklärter Flüssigkeit (4a) geklärt ankommt, dadurch gekennzeichnet, daß die Anlage weiter eine Eindickungskammer (3) von an sich bekannter Bauart aufweist die eine Sekundärstufe bildet, während die Klärkammer eine Primärstufe bildet, und die Eindickungskammer unter der Klärkammer, aber in gleicher Erstreckung, angeordnet ist,
- und daß sie einen senkrechten Schacht (7) mit einem oberen Einlaß (7a) zur Aufnahme der Flocken der oberen Schicht des Schlammbettes durch Oberlauf und zur Begrenzung der Höhe desselben, mit einem unteren Einlaß in Gestalt mindestens eines Loches (18) im unteren Teil der Klärkammer (4) zur Aufnahme der großen dichten im Schlammbett gebildeten Flockenagglomerate, und mit einem Auslaß auf mittlerer Höhe in der Eindickungskammer (3) aufweist,
- wobei die Eindickungskammer einen Auslaß (13) für das geklärte Wasser besitzt, der höher als der Auslaß des genannten zentralen Schachtes liegt, sowie einen Schlammauslaß (26) im unteren Teil.

2. Anlage nach Anspruch 1, dadurch gekennzeichnet, daß die Kammern zur Eindickung (3), Verteilung (5) und Klärung (4) im wesentlichen durchgehend zusammenhängende Seitenwände besitzen, so daß ein leichterer Aufbau der Anlage möglich ist.

3. Anlage nach Anspruch 1, dadurch gekennzeichnet, daß sie eine axiale Welle (20) aufweist, die von einem Motor (21) in Drehung versetzt wird und zugleich Räumarme (19) am Boden der Klärkammer zur Beförderung der großen Agglomerate zum unteren Eingang (18) des zentralen Schachtes (7), und Räumarme (24) am Boden der Eindickungskammer (3) zur Beförderung des eingedickten Schlamms zum Schlammauslaß (26) dieser Kammer antreibt.

4. Anlage nach Anspruch 1, dadurch gekennzeichnet, daß der zentrale Schacht (7) in seinem unteren Teil mit einem Deflektor (16) ausgestattet ist, der die Verteilung der an Agglomerat konzentrierten Flüssigkeit in der Sekundärstufe (3) verbessert.

5. Anlage nach Anspruch 1, dadurch gekennzeichnet, daß der Boden der die Injektoren (22) tragenden Primärstufe (4) waagerecht oder leicht konisch mit der Spitze nach unten verläuft.

6. Anlage nach Anspruch 1, dadurch gekennzeichnet, daß der Boden der Sekundärstufe zur Konzentration der Schlämme (3) horizontal oder leicht konisch mit der Spitze nach unten verläuft und mit umlaufenden Räumschaufeln (24) versehen ist, die die am Boden abgeschiedenen Feststoffe laufend forträumen.

## Claims

1. A sludge bed clarification apparatus for a liquid loaden with solid particles, the apparatus being more precisely intended to receive a liquid loaden with fine particles in suspension and to deliver a clarified liquid on the one hand and a sludge on the other hand, said apparatus comprising:

- a clarification chamber (4),
- a distribution chamber (5) located under the clarification chamber,
- means (8, 9, 11) for adding a flocculation additive to said loaden liquid so as to create a mixture, wherein the fine particles, which meet one another, link up by means of that additive in forming flakes,
- means (2) for feeding said mixture into the distribution chamber and adapted to establish a substantially uniform pressure therein,
- a plurality of injectors (22), each having an axis (22a), each being provided with guide means, and being distributed over the bottom area of the clarification chamber, each of these injectors putting the distribution chamber in communication with the clarification chamber for continuously feeding said mixture to the bottom of that latter chamber, with the flow rate distributed over the surface of that chamber,
- an outlet orifice (4b) for continuously removing clarified liquid (4b) from the upper part of the clarification chamber (4), and
- an outlet orifice (26) for continuously removing sludge, located below the outlet orifice for the removal of clarified liquid,
- the throughput of said injectors being chosen such as to form above these injectors a sludge bed (4a), wherein a loaden mixed liquid rises in between the flakes already formed, such that the fine particles still in suspension in the liquid link up with these flakes and increase the volume thereof, and that the liquid which arrives at the upper side of the sludge bed is clarified and forms a layer of clarified liquid (4a),
- said apparatus being characterized in that it further comprises a thickening chamber (3) of a type known per se which constitutes a secondary stage, whereas said clarification chamber constitutes a primary stage, said thickening chamber being disposed below the clarification chamber and being coextensive therewith; and
- a central vertical well (7) comprising an upper inlet (7a) for receiving by overflow the flakes of the upper layer of the sludge bed and for limiting the height thereof, a lower inlet constituted by at least one hole (18) in the clarification chamber (4) at the bottom thereof for receiving large dense agglomerates of flakes formed in the sludge bed, and an outlet at an intermediate level in said thickening chamber (3);

said thickening chamber including an outlet for clarified water (13) at a higher level than the outlet from said central well, and an outlet for sludge (26) in the lower portion thereof.

2. An apparatus according to claim 1, characterized in that the thickening (3), distribution (5) and clarification (4) chambers have side walls which are substantially continuous, thereby facilitating construction of the apparatus.

3. An apparatus according to claim 1, characterized in that the apparatus includes an axial shaft (20) rotated by a motor (21) and driving both a scraper arm (19) at the bottom of said clarification chamber for said large agglomerates towards the lower inlet (18) of the central well (7), and scraper arms (24) at the bottom of said thickening chamber (3) for moving the thickened sludge towards said sludge outlet (26) of said chamber.

4. An apparatus according to claim 1, characterized in that the central well (7) is fitted near the bottom thereof with a deflector (16) for improving within the second stage (3) the distribution of the liquid which is enriched in agglomerates.

5. An apparatus according to claim 1, characterized in that the bottom of the primary stage (4) bearing the injectors (22) is horizontal or slightly conically shaped with the point being downwardly directed.

6. An apparatus according to claim 1, characterized in that the bottom of the secondary sludge concentration stage (3) is horizontal or slightly conical with a downwardly directed point and is provided with rotating scraper blades (24) for continuously removing the solid material settled on the bottom.

# FIG.1

# FIG. 2

# FIG. 3

3

# FIG. 4

21

22d

22

22b

T2

T1

21a